# EUROPÄISCHE PATENTSCHRIFT

(11) **EP 3 542 915 B1**
(45) Veröffentlichungstag und Bekanntmachung des Hinweises auf die Patenterteilung: **20.04.2022**
(21) Anmeldenummer: 19156244.6
(22) Anmeldetag: 08.02.2019
(51) Int. Cl.: B21B 37/00

(54) **VERFAHREN ZUR STEUERUNG EINER PRODUKTIONSANLAGE EINES WALZWERKES**
METHOD FOR CONTROLLING A PRODUCTION SYSTEM OF A ROLLING MILL
PROCÉDÉ DE COMMANDE D'UNE INSTALLATION DE PRODUCTION D'UN LAMINOIR

(30) Priorität: 19.03.2018 DE 102018106393
(43) Veröffentlichungstag der Anmeldung: 25.09.2019
(73) Patentinhaber: thyssenkrupp Hohenlimburg GmbH, 58119 Hagen (DE); thyssenkrupp AG, 45143 Essen (DE)
(72) Erfinder: OSTHOFF, Rainer, 44229 Dortmund (DE)
(74) Vertreter: Richardt Patentanwälte PartG mbB

(56) Entgegenhaltungen:
- EP-A1- 2 280 324
- WO-A1-02/084420
- DE-A1- 4 338 615
- DE-A1-102008 030 243

## Beschreibung

Die Erfindung betrifft ein Verfahren zur Steuerung einer Produktionsanlage eines Walzwerkes, ein Computerprogrammprodukt sowie ein Steuermodul einer Produktionsanlage eines Walzwerkes.

Brammen aus verschiedenen Materialien wie beispielsweise Stählen, Kupferlegierungen oder Aluminium werden beispielsweise in Stranggussanlagen hergestellt und anschließend in einem Walzwerk weiterverarbeitet. Eine Möglichkeit ist zum Beispiel das Warmwalzen, wobei hierzu die Brammen auf eine entsprechende Temperatur oberhalb der Rekristallisationstemperatur erwärmt werden und im Walzspalt eines Warmwalzwerk durch Druck auf eine vorgegebene Dicke reduziert werden. Da das Volumen der Bramme gleichbleibt, kommt es zu Längen- und Breitenänderungen. Aufgrund des Walzvorgangs resultiert aus einer Bramme schließlich ein Band, welches auf einem Haspel zu einem sogenannten Coil aufgewickelt wird.

Das so hergestellte Band kann in weiteren Bearbeitungsschritten weiterverarbeitet werden, beispielsweise durch ein Anwenden eines Beizverfahrens, eines Glühverfahrens sowie eines Spaltens des Coils, also einem Längsteilen, sodass aus einem breiten Coil mehrere schmalere Einzelcoils hergestellt werden können. Im Ergebnis resultiert hieraus ein Endprodukt, welches nach entsprechender Verpackung an einen Kunden ausgeliefert werden kann.

Die DE 10 2008 030 243 A1 offenbart ein Erstellverfahren für ein auf mathematischphysikalischen Gleichungen basierendes Walzmodell, wobei das Walzmodell, wenn ihm ein innerhalb eines vorbestimmten Zustandsbereichs liegender Zustand eines Walzguts und eine innerhalb eines vorbestimmten Einstellungsbereichs liegende Gerüsteinstellung vorgegeben werden, eine Ausgangsgröße liefert, die zumindest einen bei einem durch den Zustand des Walzguts und die Gerüsteinstellung definierten Walzvorgang in dem Walzgut auftretenden Materialfluss quantitativ beschreibt. Dabei werden einem auf den Gleichungen basierenden, universelle Ansatzfunktionen verwendenden Grundmodell eine Anzahl von innerhalb des Zustandsbereichs liegenden Grundzuständen des Walzguts und eine Anzahl von innerhalb des Einstellungsbereichs liegenden Grundgerüsteinstellungen vorgegeben und es wird mittels des Grundmodells jeweils ein Ausgangszustand ermittelt. Jeder Ausgangszustand ist durch eine Anzahl von Wichtungsfaktoren beschrieben, die jeweils angeben, wie stark eine jeweils korrespondierende der universellen Ansatzfunktionen nach dem durch den jeweiligen Grundzustand des Walzguts und die jeweilige Grundgerüsteinstellung definierten Walzvorgang in dem Walzgut auftritt. Durch eine Analyse der Gesamtheit der ermittelten Ausgangszustände werden angepasste Ansatzfunktionen ermittelt, wobei die Anzahl an angepassten Ansatzfunktionen erheblich kleiner als die Anzahl an universellen Ansatzfunktionen ist. Das Walzmodell wird unter Verwendung der angepassten Ansatzfunktionen erstellt und anhand des Walzmodells wird ein Maschinencode erstellt, dessen Ausführung durch einen Rechner bewirkt, dass der Rechner das Walzmodell implementiert und anhand des Walzmodells, des Zustands des Walzguts und der Gerüsteinstellung die Ausgangsgröße ermittelt.

Der Erfindung liegt die Aufgabe zugrunde, ein verbessertes Verfahren zur Steuerung einer Produktionsanlage eines Walzwerks zu Herstellung eines coilförmigen Endprodukts, ein entsprechendes Computerprogrammprodukt sowie ein Steuermodul einer solchen Produktionsanlage bereitzustellen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Steuerung einer Produktionsanlage eines Walzwerks zur Herstellung eines coilförmigen Endprodukts aus einer Bramme angegeben, wobei die Herstellung eine Verarbeitung der Bramme durch nacheinander geschaltete Fertigungseinheiten umfasst, wobei aufgrund der Verarbeitung durch die Fertigungseinheiten jeweils ein bandförmiges Produkt resultiert, wobei aufgrund der Verarbeitung durch die letzte der Fertigungseinheiten als Produkt das Endprodukt resultiert, wobei das Verfahren ein Empfang physikalischer Daten eines zu prüfenden bandförmiges Produkts der Produkte umfasst, welches aus der Verarbeitung durch eine gegebene Fertigungseinheit der Fertigungseinheiten resultiert, wobei die physikalischen Daten eine Geometrie und/oder ein Gewicht umfassen, wobei das Verfahren einen Prüfvorgang umfasst, wobei der Prüfvorgang umfasst:
- Modellierung der Verarbeitung des zu prüfenden Produkts durch mehrere der der gegeben Fertigungseinheit nachgeschaltete Fertigungseinheiten unter Berücksichtigung der physikalischen Daten,
- im Falle dessen die Modellierung ergibt, dass unter der Berücksichtigung der physikalischen Daten eines der aus der Verarbeitung durch die nachgeschalteten Fertigungseinheiten resultierenden Produkte einem vorbestimmten Qualitätskriterium nicht entspricht, Abbruch der vorgesehenen Herstellung des Produkts und Ausgabe eines Signals bezüglich des Abbruchs.

Ausführungsformen der Erfindung könnten den Vorteil haben, dass aufgrund der Modellierung mehrerer der gegebenen Fertigungseinheiten nachgeschalteten Fertigungseinheiten unnötige Verarbeitungsschritte vermieden werden, welche beispielsweise entstehen könnten, wenn das im aktuellen Verarbeitungsschritt hergestellte zu prüfende Produkt an irgendeiner späteren Stelle der Produktionskette nicht mehr zur Weiterverarbeitung geeignet ist. Es wird also nicht lediglich geprüft, ob bezüglich des unmittelbar jetzt anstehenden Verarbeitungsschrittes das Produkt entsprechenden Vorgaben bzw. Qualitätskriterien genügt, sondern es erfolgt ein "in die Zukunft gerichteter Blick", der sich über mehrere nachgeschaltete Fertigungseinheiten erstreckt, ja sogar vorzugsweise die komplette nachgeschaltete Fertigungskette umfasst. Damit kann es also nicht mehr vorkommen, dass das Coil am Ende der Fertigungskette nicht mehr zu den entsprechenden Kundenvorgaben bezüglich Gewicht und Abmessung des Endprodukts passt und dementsprechend nicht mehr als "1a-Ware" vermarktet werden kann. Insofern könnte das Verfahren dazu dienen, einen etwaigen Ausschuss bei der Produktion der Endprodukte zu minimieren und damit die Effizienz der Produktion des Walzwerkes steigern.

Unter dem Begriff der "Fertigungseinheit" wird jede Einheit verstanden, aufgrund deren Verarbeitung eines Produktes eine physikalisch oder chemisch geänderte Form des Produktes resultiert. Beispiele für Fertigungseinheiten sind die Aggregate Walzen, Abkühlen, Beizen, Glühen, Spalten und Verpacken.

Ein "Produkt" kann ein aus einer Verarbeitung resultierendes Zwischenprodukt oder auch das Endprodukt selbst sein. Die Verarbeitung durch die letzte Fertigungseinheit hat das Endprodukt zum Ergebnis, alle anderen Fertigungseinheiten oder Verarbeitungseinheiten davor haben ein Zwischenprodukt zum Ergebnis.

"Glühen" bezeichnet eine Wärmebehandlung des Produkts, mit dem man die Werkstoffeigenschaften des Produkts verändern kann. Das "Beizen" dient der Erzielung einer blanken Oberfläche durch Einwirken von Säuren. "Spalten" bezeichnet das Längsteilen des Produkts in Streifen kleinerer Breite, zum Beispiel auf Anlagen mit Kreismesserscheren, deren Messer in entsprechendem Abstand auf entsprechenden Messerbalken befestigt sind.

Die "Modellierung" umfasst jegliche Art der Vorhersage der Veränderung der physikalischen Eigenschaften eines Produkts, wenn es durch mehrere der der gegebenen Fertigungseinheiten nachgeschalteten Fertigungseinheiten verarbeitet wurde. Eingangsparameter sind dabei die physikalischen Daten des zu prüfenden bandförmigen Produkts. Die Modellierung selbst kann beispielsweise anhand mathematischer Modelle in analytischer, heuristischer, direkt numerischer oder approximativ numerischer Form erfolgen. Möglich ist jedoch auch der Einsatz neuronaler Netzwerke, was insbesondere den Vorteil haben könnte, dass hierdurch das reale Verarbeitungsverhalten der Verarbeitungseinheiten Berücksichtigung finden kann und damit auch spezielle "Eigenheiten" der jeweiligen Fertigungseinheit automatisch berücksichtigt werden.

Das besagte Signal, welches bezüglich des Abbruchs ausgegeben wird, könnte beispielsweise ein akustisches, optisches oder elektronisches Signal sein. Beispielsweise könnte das Signal auf einem Überwachungsbildschirm ausgegeben werden, sodass ein entsprechender Bediener der Produktionsanlage in der Lage ist, nach visueller Erfassung dieses Signals entsprechende Maßnahmen einzuleiten. Im Falle dessen, dieses Signal ein rein elektronisches Signal ist, könnte dieses als "Trigger" durch die Produktionsanlage verwendet werden, um das für die Weiterverarbeitung ungeeignete zu prüfende Produkt einer anderen Verwendung zuzuführen.

Nach einer Ausführungsform der Erfindung umfasst die Modellierung der Verarbeitung eine Vorhersage der physikalischen Daten des aus der jeweiligen Verarbeitung unmittelbar resultierenden Produkts, wobei bezüglich des aus der jeweiligen Verarbeitung unmittelbar resultierenden Produkts das Qualitätskriterium einen zulässigen Toleranzbereich bezüglich einer Geometrie und/oder eines Gewichts umfasst, wobei die Modellierung der jeweiligen Verarbeitung die Vorhersage der physikalischen Daten des aus dieser jeweiligen Verarbeitung unmittelbar vorangegangene Verarbeitung resultierenden Produkts, sofern verfügbar, berücksichtigt.

Beispielsweise liefert die Modellierung der Verarbeitung des zu prüfenden Produkts ein weiteres Produkt, welches als solches aufgrund der Modellierung lediglich in hypothetischer Form vorliegt. Die Modellierung nimmt nun dieses hypothetisch vorliegende Produkt bzw. dessen hypothetische physikalische Daten als Input, um bezüglich des nun unmittelbar anstehenden nächsten Verarbeitungsschrittes für dieses hypothetische Produkt ebenfalls eine Modellierung durchzuführen. Auch durch diese weitere Modellierung entsteht wieder ein hypothetisch vorhandenes Produkt mit entsprechenden berechneten oder bestimmten physikalischen Daten, welche dann der Prüfung bezüglich der Übereinstimmung mit dem Qualitätskriterium unterzogen werden kann. Grundsätzlich kann das beschriebene Verfahren eine Prüfung und Prognose der Konformität der aus des jeweiligen zu prüfenden Produkt resultierenden Endprodukts in Bezug auf Auftragsvorgaben (Geometrie, Gewichte) zu jedem Zeitpunkt während der Fertigung ermöglichen. Ein Kunde gibt zum Beispiel genaue Vorgaben bezüglich der Breite, Dicke, dem Außendurchmesser und den Gewichten der gewünschten Endprodukte sowie deren Toleranzen an. All dies kann als "Qualitätskriterium" genutzt werden und es kann eine Prüfung stattfinden, ob ausgehend von dem aktuell zu prüfenden Produkt ein hypothetisch hieraus resultierendes Endprodukt diesen Kundenvorgaben genügt oder nicht.

Beispielsweise gibt der Toleranzbereich jenen Bereich an, bezüglich dessen eine unmittelbar nachfolgende Verarbeitung von Produkten durch die für die unmittelbar nachfolgende Verarbeitung zuständige Fertigungseinheit überhaupt zulässig ist. In anderen Worten könnte hier geprüft werden, ob ein praktisch oder auch hypothetisch zur Verarbeitung anstehendes Produkt durch die entsprechend zuständige Fertigungseinheit überhaupt verarbeitet werden kann. Hierbei geht es weniger um das Endprodukt, sondern um die Fähigkeit der Anlage, mit entsprechend zugeführten Produkten umzugehen. Beispielsweise könnte eine Spaltbandanlage die Spezifikation haben, dass die minimale Breite eines verbleibenden Spaltbandes nicht weniger als 30 mm betragen darf, da ansonsten eine korrekte Handhabung der Streifen des Kaltbreitbandes oder Warmbreitbandes ohne ein Risiko der Beschädigung der Anlage nicht mehr gewährleistet ist. Es wäre auch möglich, dass zwar die Anlage den Spaltvorgang durchführen kann, jedoch dann bezüglich des Spaltergebnisses eine vorgegebene Spaltqualität nicht mehr gewährleistet wrden kann. Ebenso kann es eine Obergrenze geben, was die Breite der verarbeitbaren Coils anbelangt, oberhalb derer die entsprechende Fertigungseinheit nicht mehr in der Lage ist, ohne eine Risiko deren Beschädigung eine entsprechende Verarbeitung durchzuführen.

Die Toleranzbereiche, bezüglich deren eine unmittelbar nachfolgende Verarbeitung von Produkten überhaupt zulässig ist, können also auch der Qualitätssicherung des durch die entsprechend zuständige Fertigungseinheit hergestellten Produktes dienen. Ist beispielsweise das in der Fertigungseinheit "Warmwalzen" hergestellte Produkt zu breit, könnte im nachgeschalteten Aggregat "Kühleinheit" ein gleichmäßiger Abkühlvorgang über die gesamte Breite des hergestellten Bandes nicht mehr gewährleistet werden. Auch hier dient der Toleranzbereich dafür, sicherzustellen, dass eine unmittelbar nachfolgende Verarbeitung von Produkten überhaupt in der Lage ist, ohne Qualitätseinbußen bezüglich des so hergestellten Produkts oder einer Beschädigung der Anlage die Verarbeitung durchzuführen.

Nach einer Ausführungsform der Erfindung gibt der Toleranzbereich an: eine minimal und eine maximal zulässige Breite und/oder ein minimal und ein maximal zulässiges Gewicht und/oder einen minimalen und einen maximalen Coil-Außendurchmesser des Produkts. Das Produkt kann dabei sowohl ein Zwischenprodukt als auch ein Endprodukt selbst umfassen.

Beispielsweise gibt der Toleranzbereich eine maximale Abweichung der aus der Verarbeitung resultierenden Ist-Geometrie von einer Soll-Geometrie des Endprodukts und/oder eine maximale Abweichung des aus der Verarbeitung resultierenden Ist-Gewichts von einem Soll-Gewicht des Endprodukts an. Die Abweichung bezüglich der gewünschten Geometrie oder bezüglich des gewünschten Gewichts kann dabei vielfältige Gründe haben. Beispielsweise kann eine Abweichung der Ist-Geometrie von der Soll-Geometrie und/oder eine Abweichung des Ist-Gewichts von dem Soll-Gewicht resultieren aufgrund eines Beizens des Produkts durch eine der Fertigungseinheiten, einem Glühen des Produkts durch eine der Fertigungseinheiten, einer Längenkürzung des bandförmigen Produkts durch eine der Fertigungseinheiten oder einer Spaltung des coilförmigen Produkts durch eine der Fertigungseinheiten.

Durch das Beizen wird Material vom Produkt entfernt, sodass sich dieses bezüglich Gewicht und Geometrie ändert. Durch das Glühen des Produkts erfolgt eine Materialveränderung, welche sich ebenfalls in insbesondere einer Gewichtsänderung niederschlagen kann. Eine Längenkürzung des bandförmigen Produkts könnte notwendig sein, wenn aufgrund des Warmwalzens die Walzendtemperatur auch nach Kühlung auf der Kühlstrecke noch so hoch ist, dass beim Haspeln des Bandes auf der relativ hierzu sehr kalten Haspelkrone beim Aufwickeln der ersten Meter des Bandes eine extreme Kühlung des Bandes stattfindet. Während das restliche Band in gleichmäßiger und homogener Weise bezüglich der gesamten übrigen Bandlänge einen Kühlvorgang erfährt, sind die ersten gehaspelten Meter des Bandes in einer diesbezüglich "andersartigen" Weise gekühlt. Dies führt zwangsläufig zu anderen physikalischen Eigenschaften dieses entsprechend andersartig gekühlten Bereiches des Bandes, wie beispielsweise anderen elastischen Eigenschaften dieses Teiles des Bandes. Da jedoch bezüglich des Endprodukts eine Homogenität der physikalischen Eigenschaften über die gesamte Bandlänge gewährleistet werden muss, erfolgt typischerweise bezüglich dieses andersartigen gekühlten Teiles des Bandes eine Kürzung, wobei dieser andersartig gekühlte Bereich des Bandes herausgeschnitten wird. Damit fehlen dem Produkt "Coil" jedoch etliche Meter an Bandmaterial, wobei hier durch die Modellierung die Weiterverarbeitung des so gekürzten Produktes bis hin zum Erhalt des hieraus resultierenden Endprodukts geprüft wird. Nur wenn trotz der Längenkürzung die entsprechenden Kundenvorgaben bezüglich des Endprodukts eingehalten werden können, also im vorliegenden Beispiel der Längenänderung die Ist-Länge des zu erwartenden Endprodukts von der Soll-Länge im Rahmen der maximalen Abweichung liegt, kann die vorgesehene Weiterverarbeitung der gekürzten Coil in der vorgesehenen Weise durch die nachgeschalteten Fertigungseinheiten stattfinden.

Nach einer Ausführungsform der Erfindung umfasst der Prüfvorgang ferner eine Vorprüfung der physikalischen Daten des zu prüfenden Produkts, wobei die in den physikalischen Daten beschriebene Geometrie einer Ist-Geometrie entspricht und/oder das in den physikalischen Daten beschriebene Gewicht einem Ist-Gewicht entspricht, wobei das zu prüfende Produkt aufgrund der vorigen Verarbeitung durch eine der Fertigungseinheiten resultiert, wobei aufgrund dieser vorigen Verarbeitung dem zu prüfenden Produkt eine Soll-Geometrie und/oder ein Soll-Gewicht zugeordnet ist, wobei im Falle dessen die Ist-Geometrie von der Soll-Geometrie und/oder das Ist-Gewicht von dem Soll-Gewicht um einen vorbestimmten Wert abweicht das Signal insbesondere bezüglich der Abweichung ausgegeben wird.

Dies könnte den Vorteil haben, dass im Rahmen einer Art Plausibilitätsprüfung festgestellt wird, ob ein vorangegangener Verarbeitungsschritt ordnungsgemäß durchgeführt wurde oder nicht. Wurde beispielsweise im obigen Beispiel der Längenkürzung ein Verarbeitungsschritt "Kürzen des Bandes" als notwendig erachtet, kann im Rahmen der besagten Plausibilitätsprüfung festgestellt werden, ob dieser Verarbeitungsschritt überhaupt durchgeführt wurde oder nicht. Im Falle der Längenkürzung würde der Verarbeitungsschritt in einer kürzeren Länge des Bandes resultieren, was sich sowohl in einer entsprechend genau berechenbaren Gewichtsänderung der Coil bzw. Längenänderung des Bandes der Coil niederschlägt. Wurde aus welchen Gründen auch immer eine Abweichung zwischen Soll- und Ist-Geometrie bzw. Soll- und Ist-Gewicht festgestellt, kann daraufhin aufgrund der Ausgabe des Signals beispielsweise manuell eine Prüfung stattfinden, inwiefern die vorangegangene Verarbeitung nicht zum gewünschten Ergebnis geführt hat.

Beispielsweise wird die Vorprüfung vor der Durchführung der Modellierung durchgeführt, was insgesamt die Computer-Verarbeitungsressourcen der Anlage schonen könnte. Da die Modellierung mit einem unter Umständen nicht unerheblichen Rechenaufwand verbunden ist, könnte der Durchführung unnötiger Berechnungen vorgebeugt werden, wenn zunächst die Vorprüfung erfolgt, da im Falle des Fehlschlagens der Vorprüfung eine weitere Modellierung überhaupt keinen Sinn macht.

Nach einer Ausführungsform der Erfindung umfasst das Verfahren ferner ein Bestimmen der Soll-Geometrie und/oder des Soll-Gewichts des zu prüfenden Produkts, wobei das Bestimmen der Soll-Geometrie und/oder des Soll-Gewichts eine Modellierung der Verarbeitung der Bramme oder eines der mehrerer der Produkte durch mehrere der der gegebenen Fertigungseinheit vorgeschalteten Fertigungseinheiten zum Erhalt des zu prüfenden Produkts umfasst. Es handelt sich hier also um eine rückwärts in die Vergangenheit gewandte Betrachtungsweise, wobei hier berücksichtigt wird, was ausgehend von beispielsweise einer Bramme bei ordnungsgemäßer Durchführung der Verarbeitungsschritte durch die vorangegangenen Fertigungseinheiten für ein Produkt hätte resultieren müssen. Dieses Produkt hat dann die physikalischen Eigenschaften einer Soll-Geometrie bzw. eines Soll-Gewichts, welches dann wiederum zur obig erwähnten Plausibilitätsprüfung herangezogen werden kann.

Nach einer Ausführungsform der Erfindung berücksichtigt die Modellierung eine Reduktion der Soll-Geometrie und/oder des Soll-Gewichts aufgrund einer Längenkürzung und/oder einer Breitenkürzung eines der Produkte durch eine der der gegebenen Fertigungseinheit vorgeschalteten Fertigungseinheiten.

Es sei an dieser Stelle angemerkt, dass die Längenkürzung und die Breitenkürzung verschiedene Gründe haben können. Neben der obig beschriebenen Problematik bezüglich der ersten stark gekühlt gehaspelten Teils der Coil können auch Abschnitte der Coil so geartet sein, dass zumindest diese Abschnitte den Kundenvorgaben bezüglich des Endprodukts nicht genügen können. Beispielsweise können verschiedene Abschnitte einer Coil Zundereinschlüsse oder Kantenrisse aufweisen, welche über beispielsweise Videovergleichstechniken detektiert werden können und als die physikalische Daten bei der Modellierung eingehen können. In diesem Fall könnte die Modellierung der Verarbeitung prüfen, ob nicht durch geschicktes Teilen des zu prüfenden Produkts zu einem bestimmten Zeitpunkt zumindest ein Teil des Produktes zu retten ist und damit als das coilförmige Endprodukt zu verwenden ist. Liegt beispielsweise als zu prüfendes Produkt eine Coil mit 650 mm Breite vor und der Kunde hat als Vorgabe bezüglich des Endprodukts eine Coil mit 200 mm Breite bestimmt, so könnte in diesem Fall ein sich über einen längeren Bereich hinziehender Kantenriss des zu prüfenden Produkts dergestalt Berücksichtigung finden, dass spätestens bei der Spaltung der Coil der Teil der Coil, welcher den Kantenriss aufweist, abgespalten wird, da damit problemlos bezüglich des übrigbleibenden Teils der Coil die gewünschte Kundenvorgabe von 200 mm Coil-Breite eingehalten werden kann.

Nach einer Ausführungsform der Erfindung umfasst das Verfahren ferner als Antwort auf die Ausgabe des Signals einen Empfang einer produktspezifischen Positivlistenkennung bezüglich des Qualitätskriteriums für welches die Modellierung ergab, dass eines der aus der Verarbeitung durch die nachgeschalteten Fertigungseinheiten resultierenden Produkte dem vorbestimmten Qualitätskriterium nicht entspricht, wobei aufgrund des Empfangs der produktspezifischen Positivlistenkennung für dieses Produkt und alle aus der Verarbeitung dieses Produkts resultierenden Produkte das Qualitätskriterium gemäß der entsprechenden Positivlistenkennung angepasst wird. Es findet also eine Art "Vererbung" statt, im Rahmen derer die Nichteinhaltung des Qualitätskriteriums ausgehend von dem zu prüfenden Produkt auch bezüglich der nachgeschalteten Fertigungseinheiten akzeptiert wird.

Damit einhergehend könnte die Positivlistenkennung auch Instruktionen beinhalten, welche die Art der Verarbeitung des zu prüfenden Produkts und der hieraus resultierenden Produkte durch die nachfolgenden Fertigungseinheiten steuern. Beispielsweise könnte die Saumbreite des zu prüfenden Produkts lediglich 10 mm betragen, wohingegen die Soll-Mindestsaumbreite des Ringes 12 mm betragen muss. In diesem Fall könnte als Positivlistenkennung eine Freigabe dieser Coil mit dem Saum von 10 mm festgelegt werden, zusammen mit der Instruktion an die nachfolgenden Fertigungseinheiten, dass eine Verarbeitungsgeschwindigkeit speziell zur Weiterverarbeitung dieses Produkts und aller hieraus resultierenden weiteren Produkte um einen bestimmten Wert reduziert werden muss.

Der Vorteil hier könnte sein, dass trotz der Nichteinhaltung des Qualitätskriteriums in individueller Weise dennoch dafür gesorgt werden könnte, dass eine Coil nicht als Ausschuss betrachtet werden muss und damit die Produktionseffektivität der Anlage reduziert wird, sondern dass auch für diesen speziellen Fall eine Möglichkeit der Weiterverarbeitung und Weiterverwendung gefunden werden kann.

Nach einer Ausführungsform der Erfindung umfasst das Verfahren ferner den Empfang einer brammenspezifischen Positivlistenkennung bezüglich des Qualitätskriteriums, wobei aufgrund des Empfangs der brammenspezifischen Positivlistenkennung für alle aus der Verarbeitung dieser Bramme resultierenden Produkte das Qualitätskriterium gemäß der entsprechenden Positivlistenkennung angepasst wird. Beispielsweise vergrößert die Positivlistenkennung in allgemeiner Weise den Toleranzbereich.

Die brammenspezifische Positivlistenkennung könnte den Vorteil haben, dass selbst beim Erhalt einer Bramme, welche gewünschten Qualitätskriterien nicht entspricht, dennoch eine Verarbeitbarkeit durch die anstehenden Verarbeitungsschritte, gegebenenfalls unter Anpassung der Verarbeitungsschritte bzw. bezüglich Verarbeitungsgeschwindigkeit, Temperaturen, Drücken usw. möglich sein könnte. Hier gilt analog das obig diskutierte bezüglich der produktspezifischen Positivlistenkennung.

Nach einer Ausführungsform der Erfindung sind die physikalischen Daten bezüglich einer Vielzahl unterschiedlicher Stellen des zu prüfenden bandförmigen Produkts gemäß einem vordefinierten Raster gegeben, wobei das ausgegebene Signal die Fehlstelle des bandförmigen Produkts angibt, bezüglich dessen physikalischer Daten die Modellierung ergibt, dass eines der aus der Verarbeitung durch die nachgeschalteten Fertigungseinheiten resultierenden Produkte dem vorbestimmten Qualitätskriterium nicht entspricht. Dies könnte den Vorteil haben, dass aufgrund der "Digitalisierung" des Produktes "Coil" eine exakte physikalische Beschreibung dieses Produktes möglich ist. Dies ermöglicht es, die durchgeführte Modellierung wesentlich exakter und den realen Gegebenheiten entsprechend durchzuführen, sodass mit deutlich höherer Präzision tatsächlich vorhergesagt werden kann, inwiefern aus der digitalisierten Coil des zu prüfenden Produkts schließlich die weiteren Zwischenprodukte und daraus das Endprodukt resultieren wird.

Nach einer Ausführungsform der Erfindung umfasst das Verfahren ferner ein Prüfen, ob ein die Fehlstelle nicht aufweisender Teil des Endprodukts einem anderen gewünschten Endprodukt aufgrund einer angepassten Verarbeitung des zu prüfenden Produkts durch die Fertigungseinheiten entspricht, wobei das Prüfen umfasst:
- Modellierung der angepassten Verarbeitung eines Teils des zu prüfenden Produkts ohne die Fehlstelle durch mehrere der gegebenen Fertigungseinheiten nachgeschalteten Fertigungseinheiten unter Berücksichtigung der physikalischen Daten,
- im Fall dessen die Modellierung ergibt, dass unter der Berücksichtigung der physikalischen Daten eines der aus der angepassten Verarbeitung durch die nachgeschalteten Fertigungseinheiten resultierenden Produkte einem vorbestimmten Qualitätskriterium nicht entspricht, Abbruch der vorgesehenen Herstellung des Produkts und Ausgabe des Signals.

Dies könnte den Vorteil haben, dass die Modellierung selbst nach Möglichkeiten sucht, wie trotz des Vorhandenseins der Fehlstelle zumindest Teile des zu prüfenden Produkts einer entsprechenden Verwendung zugeführt werden können. Aufgrund der digitalisierten Coil kann also die komplette Fertigungskette berücksichtigend vorausschauend geprüft werden, inwiefern in optimaler Weise die Herstellung eines Endproduktes bei Berücksichtigung der Fähigkeiten der Anlage und dem zu prüfenden Produkt möglich ist.

In einem weiteren Aspekt betrifft die Erfindung ein Computerprogrammprodukt mit von einem oder mehreren Prozessoren ausführbaren Instruktionen zur Durchführung des obig beschriebenen Verfahrens.

In einem weiteren Aspekt betrifft die Erfindung ein Steuermodul einer Produktionsanlage eines Walzwerkes zur Herstellung eines coilförmigen Endprodukts aus einer Bramme, wobei die Herstellung eine Verarbeitung der Bramme durch nacheinander geschaltete Fertigungseinheiten umfasst, wobei aufgrund der Verarbeitung durch die Fertigungseinheiten jeweils ein bandförmiges Produkt resultiert, wobei aufgrund der Verarbeitung durch die letzte der Fertigungseinheiten als Produkt das Endprodukt resultiert, wobei Steuermodul ausgebildet ist, physikalischer Daten eines zu prüfenden bandförmigen Produkts der Produkte, welches aus der Verarbeitung durch eine gegebene Fertigungseinheit der Fertigungseinheiten resultiert, zu empfangen, wobei die physikalischen Daten eine Geometrie und/oder ein Gewicht umfassen, wobei das Steuermodul einen Prozessor und einen Speicher mit durch den Prozessor ausführbaren Instruktionen aufweist, wobei aufgrund der Ausführung der Instruktionen der Prozessor das Steuermodul steuert zur Durchführung eines Prüfvorgangs, wobei der Prüfvorgang umfasst:
- Modellierung der Verarbeitung des zu prüfenden Produkts durch mehrere der gegeben Fertigungseinheit nachgeschaltete Fertigungseinheiten unter Berücksichtigung der physikalischen Daten,
- im Falle dessen die Modellierung ergibt, dass unter der Berücksichtigung der physikalischen Daten eines der aus der Verarbeitung durch die nachgeschalteten Fertigungseinheiten resultierenden Produkte einem vorbestimmten Qualitätskriterium nicht entspricht, Abbruch der vorgesehenen Herstellung des Produkts und Ausgabe eines Signals bezüglich des Abbruchs.

Es sei angemerkt, dass sich die obig beschriebenen Ausführungsformen in beliebiger Weise miteinander kombinieren lassen, sofern sich deren Kombination nicht gegenseitig ausschließen.

Der Fachmann wird verstehen, dass Aspekte der vorliegenden Erfindung als Gerät, Verfahren oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungs-vorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

Im Folgenden werden bevorzugt Ausführungsformen der Erfindung anhand der Zeichnungen näher erläutert. Es zeigen:
- Figur 1: ein Blockdiagramm einer Produktionsanlage eines Walzwerkes,
- Figur 2: ein Flussdiagramm eines Verfahrens zur Steuerung einer Produktionsanlage eines Walzwerkes und
- Figur 3: ein Flussdiagramm eines Verfahrens zur Steuerung einer Produktionsanlage eines Walzwerkes.

Im Folgenden werden einander ähnliche Elemente mit den gleichen Bezugszeichen gekennzeichnet.

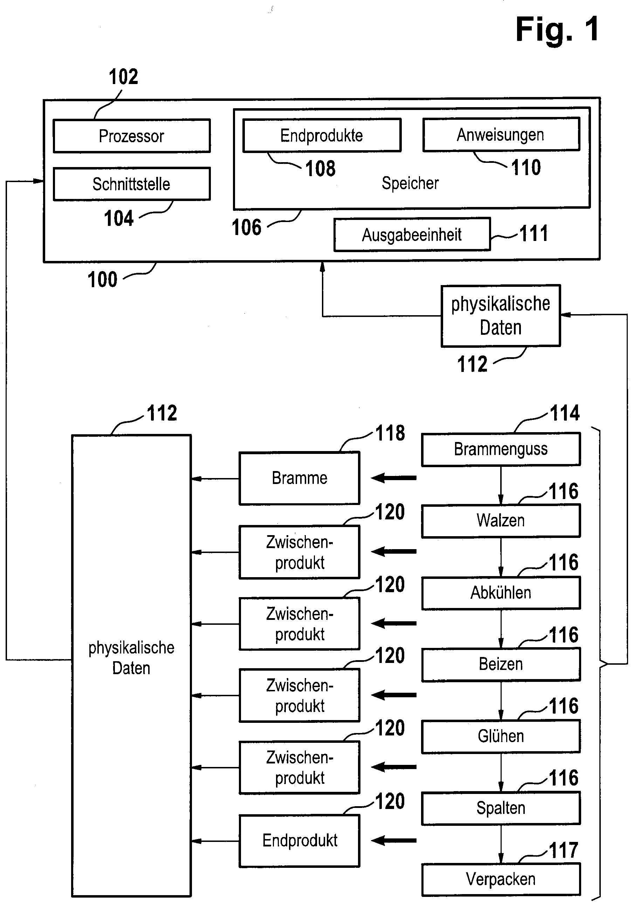

Die Figur 1 zeigt ein Blockdiagramm einer Produktionsanlage eines Walzwerkes mit verschiedenen Fertigungseinheiten 116, auch als Aggregate bezeichnet. Nicht Teil der Produktionsanlage ist beispielsweise eine Stranggussanlage, welche einen Brammenguss durchführt. Nichtsdestotrotz ist die Stranggussanlage der Vollständigkeit halber im Blockdiagramm der Figur 1 mit Bezugszeichen 114 gekennzeichnet aufgenommen, da die physikalischen Daten der hier hergestellten Bramme im Folgenden weitere Verwendung finden können.

Die hergestellte Bramme 118 kann beispielsweise in einem Warmwalzvorgang mit einem entsprechenden Aggregat 116 zu einem Band gewalzt werden, wobei hier als Zwischenprodukt 120 ein heißes gewalztes Band resultiert. Dem nachgeschaltet ist die Fertigungseinheit 116 "Abkühlen", wobei nach dem Abkühlen ein gekühltes Band resultiert, welches nach Haspeln auf einer Haspel zu einem Zwischenprodukt 120 "Coil" wird. Auch dieses Zwischenprodukt kann weiterverarbeitet werden, indem es beispielsweise durch die Fertigungseinheit 116 "Beizen" gebeizt wird, wobei als Zwischenprodukt 120 hieraus eine gebeizte Coil resultiert.

Dem nachgeschaltet ist die Fertigungseinheit "Glühen" 116, wobei hieraus als Zwischenprodukt 120 eine gekühlte Coil resultiert. Der letzte Schritt ist das Spalten durch die Fertigungseinheit "Spalten" 116, wobei hieraus schließlich das Endprodukt 120 resultiert. Dieses kann dann in einem Verarbeitungsschritt "Verpacken" durch eine entsprechende Verpackungseinheit 117 verpackt und daraufhin dem Endkunden zur Verfügung gestellt werden.

Sowohl die Bramme 118 als auch jedes der Zwischenprodukte bzw. das Endprodukt (allgemein als "Produkt" bezeichnet) ist über entsprechende physikalische Daten charakterisiert. Bezüglich der Bramme sind die geometrische Form und das Gewicht bekannt. Bezüglich der Zwischenprodukte ist eine digitale Form des Bandes bzw. des Coils verfügbar, welche beispielsweise über eine metergenaue Rasterung die Breite und Dicke des Bandes, das Gesamtgewicht der Coil als auch sonstige Fehlstellen des Bandes angeben. Die physikalischen Daten 112 können entweder, wie auf der linken Seite der Figur 1 skizziert, durch eine spezielle und separate Vermessung der Bramme bzw. des jeweiligen Zwischenprodukts gewonnen werden oder aber die physikalische Daten 112 können, wie auf der rechten Seite der Figur 1 skizziert, bereits während des Verarbeitens durch die jeweilige Fertigungseinheit 116 erfasst und gewonnen werden. Hierzu können die Fertigungseinheiten entsprechende Sensoren aufweisen, welche ein aus der jeweiligen Fertigungseinheit 116 resultierendes Band unmittelbar vermessen und digitalisieren. Beispielsweise könnten am Ende der Warmwalzstrecke des Aggregats "Walzen" entsprechende Kameras und Sensoren positioniert sein, um das in seine endgültige Form gewalzte Band unmittelbar zu vermessen, also hieraus die physikalischen Daten 112 zu gewinnen.

Die physikalischen Daten 112 werden daraufhin an ein Steuermodul 100 übergeben. Das Steuermodul 100 verfügt zunächst über eine entsprechende Schnittstelle 104, um diese physikalischen Daten 112 zu empfangen. Ferner verfügt das Steuermodul 100 über einen Prozessor 102 und einen Speicher 106, wobei der Speicher Anweisungen 110 enthält, welche nach Ausführung durch den Prozessor 102 eine Steuerung der Produktionsanlage bewirken. Insbesondere bewirken die Anweisungen 110 eine Modellierung der Verarbeitung eines der Zwischenprodukte durch mehrere der jenen Fertigungseinheiten nachgeschalteten Fertigungseinheiten unter Berücksichtigung der physikalischen Daten, welche das zu prüfende Zwischenprodukt 120 produziert hatte, sowie die Prüfung, ob die Modellierung ergibt, dass unter der Berücksichtigung der physikalischen Daten eines der aus der Verarbeitung durch die nachgeschalteten Fertigungseinheiten resultierenden Produkte einen vorbestimmten Qualitätskriterium nicht entspricht.

Ist Letzteres der Fall, so bewirken die Anweisungen 110 den Abbruch der vorgesehenen Herstellung des Produkts und die Ausgabe eines entsprechenden Signals bezüglich des Abbruchs über eine Ausgabeeinheit 111. Diese Ausgabeeinheit 111 kann beispielsweise eine grafische Benutzeroberfläche, ein akustischer Signalgeber oder eine weitere Schnittstelle sein, über welche ein entsprechendes elektronisches Signal an einen entsprechenden Empfänger übermittelt werden kann.

Des Weiteren sind im Speicher 106 Spezifikationen bezüglich herzustellender Endprodukte 108 hinterlegt, wobei diese Spezifikationen beispielsweise eine Soll-Geometrie und ein Soll-Gewicht der gewünschten jeweiligen Endprodukte umfassen.

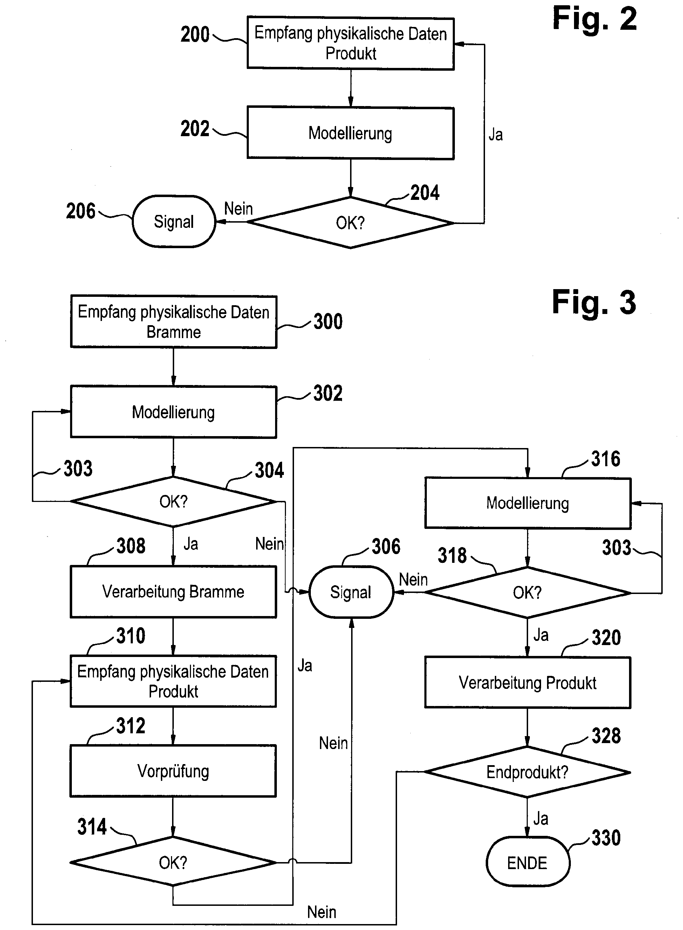

Das Flussdiagramm der Figur 2 erläutert das Grundprinzip der Funktionsweise des Steuermoduls 100. So werden in Schritt 200 zunächst von einem der Zwischenprodukte 120 die physikalischen Daten 112 empfangen.

In Schritt 202 erfolgt nun eine Modellierung der Verarbeitung dieses Bandes durch mehrere der der gegebenen Fertigungseinheit "Walzen" nachgeschalteten Fertigungseinheiten, nämlich der Fertigungseinheiten "Abkühlen", "Beizen", "Glühen", "Spalten", und zwar unter Berücksichtigung der physikalischen Daten.

Beispielsweise wird modelliert, wie sich das Zwischenprodukt 120, welches aus dem Walzvorgang resultierte, aufgrund des Abkühlens verändert. Dies wiederum ein weiteres hypothetisches Zwischenprodukt, welches dann aufgrund der Modellierung dahingehend untersucht wird, wie es sich im Rahmen eines Beizvorgangs weiter verändert. Dies setzt sich fort bis hin zur Modellierung des Erhaltes des hieraus resultierenden Endproduktes 120, wobei nun beispielsweise in Schritt 204 geprüft wird, ob das hier resultierende Produkt einem vorbestimmten Qualitätskriterium entspricht oder nicht. Ist dies nicht der Fall, wird in Schritt 206 ein Signal ausgegeben und das Verfahren abgebrochen. Entspricht hingegen das Endprodukt dem vorbestimmten Qualitätskriterium, setzt sich das Verfahren fort und das Band wird für die Weiterverarbeitung durch die nachgeschalteten Fertigungseinheiten freigegeben.

Die Figur 3 zeigt eine etwas detailliertere Ansicht eines Verfahrens zur Steuerung einer Produktionsanlage eines Walzwerkes. Das Verfahren beginnt in Schritt 300 mit dem Empfang physikalischer Daten einer zu verarbeitenden Bramme 118. Die Bramme wird bezüglich ihrer Verarbeitung in den nun vorgesehenen Fertigungseinheiten 116 in Schritt 302 modelliert. Dabei gehen als Parameter die physikalischen Daten ein. Je nach Konfiguration des Verfahrens kann der nachfolgende Schritt 304 der Prüfung, ob unter Berücksichtigung der physikalischen Daten eines der aus der Verarbeitung durch die nun relevanten Fertigungseinheiten resultierenden Produkte einem vorbestimmten Qualitätskriterium entsprechen oder nicht, für jeden der vorgesehenen Verarbeitungsschritte der Fertigungseinheit 116 oder auch nur für einen Teil der Fertigungseinheiten durchgeführt werden. Dies ist durch den Pfeil 303 symbolisiert.

Beispielsweise wird unter Verwendung der physikalischen Daten der Bramme in Schritt 302 zunächst der Walzvorgang modelliert. Daraufhin wird geprüft, ob das entsprechende Walzergebnis einem vorbestimmten Qualitätskriterium entspricht oder nicht. Entspricht dies dem Qualitätskriterium, so werden die physikalischen Daten des so modellierten Walzergebnisses wiederum der Modellierung in Schritt 302 durchgeführt, dieses Mal zur Modellierung des Abkühlvorganges. Ergibt daraufhin auch wiederum Schritt 304, dass die physikalischen Daten des aus dem Abkühlvorgang resultierenden Zwischenprodukts einem vorbestimmten Qualitätskriterium entsprechen, kann wiederum dieses dem aus Abkühlvorgang entstammende Zwischenprodukt einer weiteren Modellierung in Schritt 302 bezüglich eines nachfolgenden Beizvorganges zugeführt werden. Dieses Verfahren kann solange zyklisch wiederholt werden, bis schließlich in Schritt 304 bezüglich des resultierenden (hypothetischen) Endprodukts die Prüfung vorgenommen wurde, ob die physikalischen Daten dieses hypothetischen Endprodukts dem vorbestimmten Qualitätskriterium entsprechen oder nicht. Je nachdem wie viele zyklische Modellierungs- und Prüfschritte 302 und 304 durchgeführt wurden, setzt sich dann erst anschließend bei erfolgreicher Prüfung aller dieser Modellier- und Prüfschritte das Verfahren mit Schritt 308, nämlich der eigentlichen Verarbeitung der Bramme durch den Warmwalzprozess, fort.

Im Falle dessen zu irgendeinem Zeitpunkt der Schritt 304 ergibt, dass die Qualitätskriterien bezüglich der physikalischen Daten eines der Zwischenprodukte nicht erreicht werden, springt das Verfahren zu Schritt 306, nämlich dem Abbruch der vorgesehenen Herstellung des Produkts (in diesem Fall Abbruch des Zuführens der Bramme zum Warmwalzen) und der Ausgabe eines entsprechenden Signals bezüglich des Abbruchs.

Nachdem in Schritt 308 die Bramme durch das Warmwalzen zu einem Band gewalzt wurde, werden anschließend in Schritt 310 physikalische Daten dieses Produktes "Band" empfangen, beispielsweise in Form einer rasterförmigen Digitalisierung der physikalischen Daten dieses Bandes.

Nun erfolgt in den Schritten 312 und 314 eine optionale Vorprüfung, also eine Art Plausibilitätsprüfung, ob die vorangegangenen Verarbeitungsschritte, die zu den physikalischen Daten des Produkts geführt haben, den Vorgaben entsprechen, die bezüglich der Verarbeitung des Produkts gemacht worden sind. Im obigen Beispiel sei zunächst angenommen, dass im vorliegenden Fall solche Vorgaben nicht gemacht wurden, sodass die Schritte 312 und 314 erst später diskutiert werden würden. Insofern setzt sich das Verfahren unmittelbar mit Schritt 316 und einer Modellierung der Verarbeitung des Produkts "warmgewalztes Band" durch nachfolgende Fertigungseinheiten fort, analog der Weise wie es bezüglich bereits der Schritte 302 und 304 diskutiert wurde. Insofern sind die Schritte 316 und 318 in analoger Weise wie die Schritte 302 und 304 zu sehen.

Beispielsweise wird in Schritt 316 modelliert, wie aufgrund der in Schritt 310 empfangenen physikalischen Daten ein entsprechender Abkühlvorgang im Aggregat "Abkühlen" vonstattengehen würde und es wird dann in Schritt 318 überprüft, ob das resultierende Produkt "abgekühltes und gehaspeltes Band" einem entsprechenden Qualitätskriterium entspricht. Ist das Qualitätskriterium erfüllt, können die so modellierten Daten wiederum in Schritt 316 einer weiteren Modellierung für eine weitere nachfolgende Verarbeitung, beispielsweise durch die Beize, zugeführt werden, wobei auch hier wieder nachfolgend in Schritt 318 überprüft wird, ob das hieraus resultierende Produkt "gebeiztes Band" dem entsprechend vorbestimmten Qualitätskriterium entspricht oder nicht. Sind nun die mehreren Qualitätskriterien für die entsprechenden Fertigungseinheiten jeweils erfüllt, setzt sich das Verfahren in Schritt 320 mit der eigentlichen Verarbeitung des Produktes, im vorliegenden Beispiel dem Abkühlen des Produktes, in der gewünschten Weise fort.

In Schritt 328 wird daraufhin überprüft, ob das nun hergestellte Produkt das Endprodukt ist, was selbstverständlich im Beispiel des abgekühlten Bandes nicht der Fall ist. Insofern setzt sich daraufhin das Verfahren in Schritt 310 mit dem Empfang physikalischer Daten bezüglich des gehaspelten und abgekühlten Produktes fort.

Im Folgenden sei angenommen, dass das Aggregat des Abkühlens auch zusätzlich über eine Möglichkeit zur Kürzung der Länge des gekühlten Bandes verfügt. In der Praxis könnte es sich hierbei jedoch um ein separates Aggregat handeln oder dieser Prozess könnte manuell durchgeführt werden. Unabhängig davon muss jedoch nach einer Kürzung des Bandes eine Veränderung der physikalischen Daten des Bandes, nämlich Gewicht und Länge, resultieren, und das in einer sehr definierten und bestimmbaren Weise.

Insofern können nun die Verfahrensschritte 312 und 314 durchgeführt werden, wobei die Vorprüfung nun rückwärts betrachtend analysiert, inwieweit zum Beispiel ausgehend von den physikalischen Daten des warmgewalzten Bandes (vor der Abkühlung) aufgrund der Längenkürzung eine Soll-Länge und ein Soll-Gewicht des abgekühlten und gekürzten Bandes hätte resultieren müssen. Schritt 312 bestimmt also einen Soll-Wert bezüglich der geometrischen Form und/oder des Gewichts des gekürzten, abgekühlten Bandes. Schritt 314 prüft dann, ob die physikalischen Daten, welche in Schritt 310 empfangen wurden, als Ist-Werte den besagten SollWerten mit entsprechenden Toleranzbereichen entspricht. Ist eine Entsprechung nicht vorhanden, muss davon ausgegangen werden, dass die vorgegebene Kürzung aus welchen Gründen auch immer nicht vorgenommen wurde und es wird in Schritt 306 das Signal ausgegeben. Ergibt Schritt 314 jedoch, dass die Plausibilitätsprüfung erfolgreich war, setzt sich das Verfahren in Schritt 316 fort, in diesem Fall mit der Modellierung des Beizvorgangs bezüglich des abgekühlten und gekürzten Bandes, wobei hier die physikalischen Daten des abgekühlten und gekürzten Bandes eingehen. Hieraus resultieren entsprechende modellierte physikalische Daten eines hypothetisch gebeizten Bandes, wobei in Schritt 318 eine Überprüfung erfolgt, ob diese Daten einem vorbestimmten Qualitätskriterium entsprechen oder nicht. Entsprechen sie dem Qualitätskriterium, kann wiederum in Schritt 316 modelliert werden, wie das so hypothetisch vorhandene gebeizte Band sich bezüglich des Glühens verändern würde usw.

Schritt 318 bzw. zuvor Schritt 304 berücksichtigen jedoch nicht nur die Frage, ob letzten Endes das resultierende Endprodukt bezüglich seiner Qualität dem eigentlich gewünschten Endprodukt entspricht oder nicht. Vielmehr dienen die Schritte 304 bzw. 318 auch dazu, um zu überprüfen, ob ein im Rahmen eines hypothetisch durchgeführten Verarbeitungsschrittes durch eine der Fertigungseinheiten überhaupt durch eine nachfolgende Fertigungseinheit weiterverarbeitbar ist oder nicht. Ergibt beispielsweise Schritt 304 als Ergebnis, dass ein hypothetisch warmgewalztes Band viel zu breit ist für eine weitere Verarbeitung durch eine der nachfolgenden Aggregate, wäre auch dies ein Grund, das Verfahren mit Schritt 306 abzubrechen. Optional ist es möglich, bezüglich eines Qualitätskriteriums, für welches eine Verarbeitung durch nachgeschaltete Fertigungseinheiten nicht problemlos möglich ist, eine Positivlistenkennung diesem Produkt zuzuordnen und festzulegen, dass dennoch eine Weiterverarbeitung des Produkts durch nachgeschaltete Fertigungseinheiten erlaubt werden soll-gegebenenfalls unter veränderten Verarbeitungsbedingungen, wie beispielsweise einer reduzierten Verarbeitungsgeschwindigkeit.

Schließlich endet das Verfahren in Schritt 330, wenn in Schritt 328 festgestellt wurde, dass das aus dem entsprechenden Verarbeitungsschritt resultierende Produkt das Endprodukt ist.

Zusammengefasst ermöglicht das Verfahren eine Prüfung und Prognose der Konformität von produzierten Coils in Bezug auf Auftragsvorgaben (Geometrie, Gewichte) zu jedem Zeitpunkt während der Fertigung. Der Kunde gibt genaue Vorgaben bezüglich der Breite, Dicke, dem Außendurchmesser und den Gewichten sowie deren Toleranzen vor. Nach Durchlauf des ersten Aggregats (Mittelbandstraße, Walzen) sind erstmals die Ist-Daten zum entstehenden Coil verfügbar. Dazu gehören vor allem Dingen das Gewicht, die mittlere Dicke, die mittlere sowie die minimale und maximale Breite. Wie bereits oben erwähnt, könnte jedoch eine rastergenaue Digitalisierung von Coils und zu Bändern aufzurollenden Coils zu einer wesentlich exakteren Prüfung und Prognose der besagten Konformität der Coils führen.

Anhand der Ist-Daten und unter Berücksichtigung der noch anstehenden Fertigungswege, bei denen noch Geometrieänderungen (zum Beispiel Besäumen, Teilen, Spalten) oder Gewichtsverlust (Putzen, Probenentnahme) zu erwarten sind, werden resultierende Zwischenprodukte und das Endprodukt gegen Fertigungs- und Kundenvorgaben geprüft. Dazu gehören unter anderem nachfolgende Prüfungen: minimale Spaltbreite unterschritten, Saumbreite über- oder unterschritten, minimale oder maximale Einsatzbreite unter- oder überschritten, minimaler oder maximaler Außendurchmesser unter- oder überschritten, minimales oder maximales Einsatzgewicht unter- oder überschritten, Endprodukt Fertigring zu leicht oder zu schwer für Kundenauftrag, Endprodukt Fertigring zu schmal oder zu breit für Kundenauftrag. Unter Einsatzbreite bzw. Einsatzgewicht wird dabei die Breite bzw. das Gewicht des zu einem Coil aufgewickelten, gewalzten Bandes verstanden, welches dem nächsten Aggregat zugeführt wird.

Im Falle eines Fehlschlagens der Prüfung wird das entsprechende Zwischenprodukt für eine weitere Fertigung automatisch gesperrt. Die frühe Prognose hilft, Maßnahmen einzuleiten um das Produkt zu retten, beispielsweise um zumindest Teile hiervon noch einem Endprodukt mit gewünschten Vorgaben zuzuführen und die hierzu notwendige Fertigungskette entsprechend anzupassen. Weiterhin wird durch diese Prüfungen plausibilisiert, ob alle Vorgaben durchgeführt worden sind. Zum Beispiel wird dadurch festgestellt, ob eine vorgegebene Kürzung von 10 m auch durchgeführt wurde oder nicht.

Vorzugsweise finden diese Prüfungen hinter jedem Aggregat des Fertigungsweges statt. Die besagten Prüfungen sind im Rahmen eines sogenannten White-List-Verfahrens mit Positivlistenkennungen verwendbar. Gewisse Fehler (zum Beispiel zu kleiner/großer Außendurchmesser, Gewicht) können bezüglich eines einzelnen Rings mit Ober- und Untergrenze erlaubt werden. Neben der White-Liste auf Ringebene gibt es auch Prüfungen und White-List-Verfahren bei den Brammen (brammenspezifische Positivlistenkennung). Ist zum Beispiel die Bramme für den Kundenauftrag zu leicht produziert worden, kann schon die Bramme erlaubt werden und diese Erlaubnis wird an die hieraus resultierenden Ringe vererbt.

### Bezugszeichenliste

- 100: Steuermodul
- 102: Prozessor
- 104: Schnittstelle
- 106: Speicher
- 108: Endprodukte
- 110: Anweisungen
- 111: Ausgabeeinheit
- 112: physikalische Daten
- 114: Brammenguss
- 116: Aggregate
- 117: Verpackungseinheit
- 118: Bramme
- 120: Zwischenprodukt/Endprodukt

## Patentansprüche

1. Verfahren zur Steuerung einer Produktionsanlage eines Walzwerkes zur Herstellung eines coilförmigen Endprodukts aus einer Bramme (118), wobei die Herstellung eine Verarbeitung der Bramme (118) durch nacheinander geschaltete Fertigungseinheiten (116) umfasst, wobei aufgrund der Verarbeitung durch die Fertigungseinheiten (116) jeweils ein bandförmiges Produkt (120) resultiert, wobei aufgrund der Verarbeitung durch die letzte der Fertigungseinheiten (116) als Produkt (120) das Endprodukt (120) resultiert, wobei das Verfahren einen Empfang physikalischer Daten (112) eines zu prüfenden bandförmiges Produkts (120) der Produkte (120) umfasst, welches aus der Verarbeitung durch eine gegebene Fertigungseinheit (116) der Fertigungseinheiten (116) resultiert, wobei die physikalischen Daten (112) eine Geometrie und/oder ein Gewicht umfassen, wobei das Verfahren einen Prüfvorgang umfasst, wobei der Prüfvorgang umfasst:
- Modellierung der Verarbeitung des zu prüfenden Produkts durch mehrere der der gegebenen Fertigungseinheit (116) nachgeschaltete Fertigungseinheiten (116) unter Berücksichtigung der physikalischen Daten (112),
- Im Falle dessen die Modellierung ergibt, dass unter der Berücksichtigung der physikalischen Daten (112) eines der aus der Verarbeitung durch die nachgeschalteten Fertigungseinheiten (116) resultierenden Produkte (120) einem vorbestimmten Qualitätskriterium nicht entspricht, Abbruch der vorgesehenen Herstellung des Produkts (120) und Ausgabe eines Signals bezüglich des Abbruchs.

2. Verfahren nach einem der vorigen Ansprüche, wobei die Modellierung der Verarbeitung eine Vorhersage der physikalischen Daten (112) des aus der jeweiligen Verarbeitung unmittelbar resultierenden Produkts (120) umfasst, wobei bezüglich des aus der jeweiligen Verarbeitung unmittelbar resultierenden Produkts das Qualitätskriterium einen zulässigen Toleranzbereich bezüglich einer Geometrie und/oder eines Gewichts umfasst, wobei die Modellierung der jeweiligen Verarbeitung die Vorhersage der physikalischen Daten (112) des aus dieser jeweiligen Verarbeitung unmittelbar vorangegangene Verarbeitung resultierenden Produkts (120), sofern verfügbar, berücksichtigt.

3. Verfahren nach Anspruch 2, wobei der Toleranzbereich jenen Bereich angibt, bezüglich dessen eine unmittelbar nachfolgende Verarbeitung von Produkten (120) durch die für die unmittelbar nachfolgende Verarbeitung zuständige Fertigungseinheit (116) überhaupt zulässig ist.

4. Verfahren nach Anspruch 2 oder 3, wobei der Toleranzbereich angibt:
- eine minimal und eine maximal zulässige Breite und/oder
- ein minimal und ein maximal zulässiges Gewicht und/oder
- einen minimalen und einen maximalen Coil-Außendurchmesser des Produkts (120).

5. Verfahren nach einem der vorigen Ansprüche 2 - 4, wobei der Toleranzbereich eine maximale Abweichung der aus der Verarbeitung resultierenden Ist-Geometrie von einer Soll-Geometrie des Endprodukts (120) und/oder eine maximale Abweichung des aus der Verarbeitung resultierenden Ist-Gewichts von einem Soll-Gewicht des Endprodukts umfasst.

6. Verfahren nach Anspruch 5, wobei die Abweichung der Ist-Geometrie von der Soll-Geometrie und/oder die Abweichung des Ist-Gewichts von dem Soll-Gewicht resultiert aufgrund:
- Einem Beizen des Produkts (120) durch eine der Fertigungseinheiten (116),
- Einem Glühen des Produkts (120) durch eine der Fertigungseinheiten (116),
- Einer Längenkürzung des bandförmigen Produkts durch eine der Fertigungseinheiten (116) oder
- Einer Spaltung des coilförmigen Produkts durch eine der Fertigungseinheiten (116).

7. Verfahren nach einem der vorigen Ansprüche, wobei der Prüfvorgang ferner eine Vorprüfung der physikalischen Daten (112) des zu prüfenden Produkts umfasst, wobei die in den physikalischen Daten (112) beschriebene Geometrie einer Ist-Geometrie entspricht und/oder das in den physikalischen Daten (112) beschriebene Gewicht einem Ist-Gewicht entspricht, wobei das zu prüfende Produkt (120) aufgrund der vorigen Verarbeitung durch eine der Fertigungseinheiten (116) resultiert, wobei aufgrund dieser vorigen Verarbeitung dem zu prüfenden Produkt (120) eine Soll-Geometrie und/oder ein Soll-Gewicht zugeordnet ist, wobei im Falle dessen die Ist-Geometrie von der Soll-Geometrie und/oder das Ist-Gewicht von dem Soll-Gewicht um einen vorbestimmten Wert abweicht das Signal ausgegeben wird.

8. Verfahren nach Anspruch 7, wobei die Vorprüfung vor der Durchführung der Modellierung durchgeführt wird.

9. Verfahren nach Anspruch 7 oder 8, ferner umfassend Bestimmen der Soll-Geometrie und/oder des Soll-Gewichts des zu prüfenden Produkts, wobei das Bestimmen der Soll-Geometrie und/oder des Soll-Gewichts eine Modellierung der Verarbeitung der Bramme (118) oder eines oder mehrerer der Produkte durch mehrere der der gegeben Fertigungseinheit (116) vorgeschalteten Fertigungseinheiten (116) zum Erhalt des zu prüfenden Produkts (120) umfasst.

10. Verfahren nach Anspruch 9, wobei die Modellierung eine Reduktion der Soll-Geometrie und/oder des Soll-Gewichts aufgrund einer Längenkürzung und/oder einer Breitenkürzung eines der Produkte durch eine der der gegeben Fertigungseinheit (116) vorgeschalteten Fertigungseinheiten (116) berücksichtigt.

11. Verfahren nach einem der vorigen Ansprüche, ferner umfassend als Antwort auf die Ausgabe des Signals, Empfang einer produktspezifischen Positivlistenkennung bezüglich des Qualitätskriteriums für welches die Modellierung ergab, dass eines der aus der Verarbeitung durch die nachgeschalteten Fertigungseinheiten (116) resultierenden Produkte (120) dem vorbestimmten Qualitätskriterium nicht entspricht, wobei aufgrund des Empfangs der Produktspezifischen Positivlistenkennung für dieses Produkt (120) und alle aus der Verarbeitung dieses Produkts resultierenden Produkte (120) das Qualitätskriterium gemäß der entsprechenden Positivlistenkennung angepasst wird.

12. Verfahren nach einem der vorigen Ansprüche, ferner umfassend Empfang einer Brammenspezifischen Positivlistenkennung bezüglich des Qualitätskriteriums, wobei aufgrund des Empfangs der Brammenspezifischen Positivlistenkennung für alle aus der Verarbeitung dieser Bramme (118) resultierenden Produkte (120) das Qualitätskriterium gemäß der entsprechenden Positivlistenkennung angepasst wird.

13. Verfahren nach Anspruch 11 oder 12, wobei die Positivlistenkennung den Toleranzbereich vergrößert.

14. Verfahren nach einem der vorigen Ansprüche, wobei die physikalischen Daten (112) bezüglich einer Vielzahl unterschiedlicher Stellen des zu prüfenden bandförmigen Produkts gemäß einem vordefinierten Raster gegeben sind, wobei das ausgegebene Signal die Fehlstelle des bandförmigen Produkts angibt, bezüglich dessen physikalischer Daten (112) die Modellierung ergibt, dass eines der aus der Verarbeitung durch die nachgeschalteten Fertigungseinheiten (116) resultierenden Produkte (120) dem vorbestimmten Qualitätskriterium nicht entspricht.

15. Verfahren nach Anspruch 14, ferner umfassend Prüfen, ob ein die Fehlstelle nicht aufweisender Teil des Endprodukts einem anderen gewünschten Endprodukt aufgrund einer angepassten Verarbeitung des zu prüfenden Produkts durch die Fertigungseinheiten (116) entspricht, wobei das Prüfen umfasst:
- Modellierung der angepassten Verarbeitung eines Teils des zu prüfenden Produkts ohne die Fehlstelle durch mehrere der gegeben Fertigungseinheit (116) nachgeschalteten Fertigungseinheiten (116) unter Berücksichtigung der physikalischen Daten (112),
- Im Falle dessen die Modellierung ergibt, dass unter der Berücksichtigung der physikalischen Daten (112) eines der aus der angepassten Verarbeitung durch die nachgeschalteten Fertigungseinheiten (116) resultierenden Produkte (120) einem vorbestimmten Qualitätskriterium nicht entspricht, Abbruch der vorgesehenen Herstellung des Endprodukts und Ausgabe des Signals.

16. Computerprogrammprodukt mit von einem oder mehreren Prozessoren ausführbaren Instruktionen zur Durchführung des Verfahrens gemäß einem der vorigen Ansprüche.

17. Steuermodul (100) für eine Produktionsanlage eines Walzwerkes zur Herstellung eines coilförmigen Endprodukts aus einer Bramme (118), wobei die Herstellung eine Verarbeitung der Bramme (118) durch nacheinander geschaltete Fertigungseinheiten (116) umfasst, wobei aufgrund der Verarbeitung durch die Fertigungseinheiten (116) jeweils ein bandförmiges Produkt (120) resultiert, wobei aufgrund der Verarbeitung durch die letzte der Fertigungseinheiten (116) als Produkt (120) das Endprodukt resultiert, wobei Steuermodul ausgebildet ist, physikalischer Daten (112) eines zu prüfenden bandförmigen Produkts (120) der Produkte (120), welches aus der Verarbeitung durch eine gegebene Fertigungseinheit (116) der Fertigungseinheiten (116) resultiert, zu empfangen, wobei die physikalischen Daten (112) eine Geometrie und/oder ein Gewicht umfassen, wobei das Steuermodul einen Prozessor (102) und einen Speicher (106) mit durch den Prozessor ausführbaren Instruktionen (110) aufweist, wobei aufgrund der Ausführung der Instruktionen (110) der Prozessor (102) das Steuermodul (100) steuert zur Durchführung eines Prüfvorgangs, wobei der Prüfvorgang umfasst:
- Modellierung der Verarbeitung des zu prüfenden Produkts durch mehrere der gegeben Fertigungseinheit (116) nachgeschaltete Fertigungseinheiten (116) unter Berücksichtigung der physikalischen Daten (112),
- Im Falle dessen die Modellierung ergibt, dass unter der Berücksichtigung der physikalischen Daten (112) eines der aus der Verarbeitung durch die nachgeschalteten Fertigungseinheiten (116) resultierenden Produkte (120) einem vorbestimmten Qualitätskriterium nicht entspricht, Abbruch der vorgesehenen Herstellung des Produkts (120) und Ausgabe eines Signals bezüglich des Abbruchs.

## Claims

1. A method for controlling a production system of a rolling mill for the production of a coil-shaped end product from a slab (118), the production comprising processing the slab (118) by sequentially arranged production units (116), a respective strip-shaped product (120) resulting from the processing by the production units (116), the end product (120) resulting as a product (120) from the processing by the last of the production units (116), the method comprising receiving physical data (112) of a strip-shaped product (120), to be tested, of the products (120), which results from the processing by a given production unit (116) of the production units (116), the physical data (112) encompassing a geometry and/or a weight, the method comprising a testing procedure, the testing procedure comprising:
- modeling, under consideration of the physical data (112), the processing of the product to be tested by a plurality of the production units (116) arranged downstream from the given production unit (116);
- in case the modelling shows that, under consideration of the physical data (112), one of the products (120) resulting from the processing by the downstream production units (116) does not meet a predetermined quality criterion, terminating the intended production of the product (120) and outputting a signal regarding the termination.

2. The method according to any one of the preceding claims, wherein the modelling of the processing comprises predicting the physical data (112) of the product (120) resulting directly from the respective processing, with respect to the product directly resulting from the respective processing, the quality criterion encompassing a permissible tolerance range with respect to a geometry and/or a weight, and the modelling of the respective processing taking into account, if available, the prediction of the physical data (112) of the product (120) resulting directly from this particular processing.

3. The method according to claim 2, wherein the tolerance range indicates the range in relation to which a directly subsequent processing of products (120) by the production unit (116) responsible for the directly subsequent processing is even permissible.

4. The method according to claim 2 or 3, wherein the tolerance range indicates:
- a minimum and a maximum permissible width and/or
- a minimum and a maximum permissible weight and/or
- a minimum and a maximum coil outside diameter of the product (120).

5. The method according to any one of the preceding claims 2 to 4, wherein the tolerance range comprises a maximum deviation of the actual geometry resulting from the processing from a target geometry of the end product (120) and/or a maximum deviation of the actual weight resulting from the processing from a target weight of the end product.

6. The method according to claim 5, wherein the deviation of the actual geometry from the target geometry and/or the deviation of the actual weight from the target weight result from:
- a pickling of the product (120) by one of the production units (116);
- an annealing of the product (120) by one of the production units (116);
- a shortening of the length of the strip-shaped product by one of the production units (116); or
- a splitting of the coil-shaped product by one of the production units (116).

7. The method according to any one of the preceding claims, wherein the testing procedure furthermore comprises a preliminary test of the physical data (112) of the product to be tested, the geometry described in the physical data (112) corresponding to an actual geometry and/or the weight described in the physical data (112) corresponding to an actual weight, the product (120) to be tested resulting from the prior processing by one of the production units (116), a target geometry and/or a target weight being assigned to the product (120) to be tested based on this prior processing, and the signal being output in case the actual geometry deviates from the target geometry and/or the actual weight deviates from the target weight by a predetermined value.

8. The method according to claim 7, wherein the preliminary test is carried out before the modeling is carried out.

9. The method according to claim 7 or 8, furthermore comprising determining the target geometry and/or the target weight of the product to be tested, the determination of the target geometry and/or of the target weight comprising a modelling the processing of the slab (118) or one or more of the products by a plurality of production units (116) arranged upstream from the given production unit (116) to obtain the product (120) to be tested.

10. The method according to claim 9, wherein the modelling takes into account a reduction of the target geometry and/or of the target weight due to a length reduction and/or a width reduction of one of the products by one of the production units (116) arranged upstream from the given production unit (116).

11. The method according to any one of the preceding claims, furthermore comprising, in response to the signal being output, receiving a product-specific positive list identifier related to the quality criterion for which the modelling showed that one of the products (120) resulting from the processing by the downstream production units (116) does not meet the predetermined quality criterion, the quality criterion being adapted according to the corresponding positive list identifier based on the reception of the product-specific positive list identifier for this product (120) and all products (120) resulting from the processing of this product.

12. The method according to any one of the preceding claims, furthermore comprising receiving a slab-specific positive list identifier related to the quality criterion, the quality criterion being adapted in accordance with the corresponding positive list identifier for all products (120) resulting from the processing of this slab (118) based on the reception of the slab-specific positive list identifier.

13. The method according to claim 11 or 12, wherein the positive list identifier increases the tolerance range.

14. The method according to any one of the preceding claims, wherein the physical data (112) relates to a plurality of different locations of the strip-shaped product to be tested according to a predefined pattern, the output signal indicating the defect area of the strip-shaped product with respect to the physical data (112) of which the modeling shows that a product (120) resulting from the processing by the downstream production units (116) does not meet the predetermined quality criterion.

15. The method according to claim 14, furthermore comprising testing whether a portion of the end product that does not include the defect area corresponds to another desired end product based on adapted processing of the product to be tested by the production units (116), the testing comprising:
- modeling, under consideration of the physical data (112), the adapted processing of a portion of the product to be tested without the defect area by a plurality of the production units (116) arranged downstream from the given production unit (116); and
- in case the modelling shows that, under consideration of the physical data (112), one of the products (120) resulting from the adapted processing by the downstream production units (116) does not meet a predetermined quality criterion, terminating the intended production of the end product and outputting the signal.

16. A computer program product, including instructions executable by one or more processors for carrying out the method according to any one of the preceding claims.

17. A control module (100) for a production system of a rolling mill for the production of a coil-shaped end product from a slab (118), the production comprising processing the slab (118) by sequentially arranged production units (116), a respective strip-shaped product (120) resulting from the processing by the production units (116), the end product resulting as a product (120) from the processing by the last of the production units (116), the control module being designed to receive physical data (112) of a strip-shaped product (120) to be tested of the products (120), which results from the processing by a given production unit (116) of the production units (116), the physical data (112) encompassing a geometry and/or a weight, the control module comprising a processor (102) and a memory (106) including instructions (110) executable by the processor, based on the execution of the instructions (110) the processor (102) controlling the control device (100) to carry out a testing procedure, the testing procedure comprising:
- modeling, under consideration of the physical data (112), the processing of the product to be tested by a plurality of the production units (116) arranged downstream from the given production unit (116);
- in case the modelling shows that, under consideration of the physical data (112), one of the products (120) resulting from the processing by the downstream production units (116) does not meet a predetermined quality criterion, terminating the intended production of the product (120) and outputting a signal regarding the termination.

## Revendications

1. Procédé de commande d'une installation de production d'un laminoir permettant la fabrication d'un produit final en forme de bobine à partir d'une brame (118), dans lequel la fabrication comprend un traitement de la brame (118) par des unités de production (116) agencées les unes derrière les autres, dans lequel, en raison du traitement par les unités de production (116), il en résulte chaque fois un produit (120) en forme de bande, dans lequel, en raison du traitement par la dernière des unités de production (116), il en résulte le produit final (120) en tant que produit (120), où le procédé comprend la réception de données physiques (112) d'un produit (120) en forme de bande à contrôler parmi les produits (120), lequel est le résultat du traitement par une unité de production (116) donnée parmi les unités de production (116), dans lequel les données physiques (112) comprennent une géométrie et/ou un poids, où le procédé comprend un processus de contrôle, où le processus de contrôle comprend :
- la modélisation du traitement du produit à contrôler par plusieurs parmi les unités de production (116) agencées après l'unité de production (116) donnée en tenant compte des données physiques (112),
- dans le cas où la modélisation révèle qu'en tenant compte des données physiques (112), un des produits (120) résultant du traitement par les unités de production (116) agencées postérieurement ne correspond pas à un critère de qualité prédéterminé, il y a une interruption de la fabrication prévue du produit (120) et l'émission d'un signal concernant l'interruption.

2. Procédé selon l'une des revendications précédentes, dans lequel la modélisation du traitement comprend une prédiction des données physiques (112) du produit (120) résultant immédiatement après le traitement respectif, où, en ce qui concerne le produit résultant immédiatement du traitement respectif, le critère de qualité comprend une plage de tolérance permissible en ce qui concerne une géométrie et/ou un poids, où la modélisation du traitement respectif tient compte de la prédiction des données physiques (112) du produit (120) résultant de ce traitement réalisé immédiatement à partir du traitement respectif dans la mesure où elle est disponible.

3. Procédé selon la revendication 2, dans lequel la plage de tolérance indique une plage en ce qui concerne un traitement immédiatement postérieur de produits (120) dans laquelle l'unité de production (116) associée au traitement immédiatement postérieur est absolument autorisée.

4. Procédé selon la revendication 2 ou la revendication 3, dans lequel la plage de tolérance indique :
- une largeur minimale et une largeur maximale permises, et//ou
- un poids minimal et un poids maximal permis, et/ou
- un diamètre extérieur de bobine minimal et un diamètre extérieur de bobine maximal du produit (120).

5. Procédé selon l'une des revendications précédentes 2 à 4, dans lequel la plage de tolérance comprend une déviation maximale de la géométrie réelle résultant du traitement par rapport à une géométrie souhaitée du produit final (120) et/ou une déviation maximale du poids réel résultant du traitement par rapport à un poids souhaité du produit final.

6. Procédé selon la revendication 5, dans lequel la déviation de la géométrie réelle par rapport à la géométrie souhaitée, et/ou la déviation du poids réel par rapport au poids souhaité, est causée du fait :
- d'un apport d'une teinture sur le produit (120) par l'une des unités de production (116),
- d'un recuit du produit (120) par l'une des unités de production (116),
- d'un raccourcissement en longueur du produit en forme de bande par l'une des unités de production (116), ou
- d'un clivage du produit en forme de bobine par l'une des unités de production (116).

7. Procédé selon l'une des revendications précédentes, dans lequel le processus de contrôle comprend en outre un précontrôle des données physiques (112) du produit à contrôler, dans lequel la géométrie décrite dans les données physiques (112) correspond à une géométrie réelle et/ou le poids décrit dans les données physiques (112) correspond à un poids réel, dans lequel le produit (120) à contrôler est le résultat d'un traitement ultérieur par l'une des unités de production (116), dans lequel, suite à ce traitement antérieur, une géométrie souhaitée et/ou un poids souhaité sont associés au produit (120) à contrôler, dans lequel, dans le cas où la géométrie réelle et/ou le poids réel dévient de la géométrie souhaitée et/ou du poids souhaité d'une valeur prédéterminée, le signal est émis.

8. Procédé selon la revendication 7, dans lequel le précontrôle est effectué avant l'exécution de la modélisation.

9. Procédé selon la revendication 7 ou la revendication 8, comprenant en outre une détermination de la géométrie souhaitée et/ou du poids souhaité du produit à contrôler, dans lequel la détermination de la géométrie souhaitée, et/ou du poids souhaité, comprend une modélisation du traitement de la brame (118) ou d'un ou de plusieurs des produits par plusieurs des unités de production (116) données parmi les unités de production (116) agencées auparavant pour l'obtention du produit (120) à contrôler.

10. Procédé selon la revendication 9, dans lequel la modélisation tient compte d'une réduction de la géométrie souhaitée et/ou du poids souhaité en raison d'un raccourcissement en longueur et/ou d'un raccourcissement en largeur d'un des produits par l'une des unités de production (116) agencée avant l'unité de production (116) donnée.

11. Procédé selon l'une des revendications précédentes, comprenant en outre, en réponse à l'émission du signal, la réception d'un identifiant de liste positive spécifique pour le produit en ce qui concerne le critère de qualité pour lequel la modélisation a eu pour résultat qu'un des produits (120) résultant du traitement par les unités de production (116) agencées postérieurement ne correspond pas au critère de qualité prédéterminé, dans lequel, en raison de la réception de l'identifiant de liste positive spécifique pour le produit, le critère de qualité est adaptée pour ce produit (120) et tous les autres produits (120) résultant du traitement de ce produit conformément à l'identifiant de liste positive correspondant.

12. Procédé selon l'une des revendications précédentes, comprenant en outre la réception d'un identifiant de liste positive spécifique pour une brame en ce qui concerne le critère de qualité, dans lequel, en raison de la réception de l'identifiant de liste positive spécifique pour la brame pour tous les produits (120) résultant du traitement de cette brame (118), le critère de qualité est adapté conformément à l'identifiant de liste positive correspondant.

13. Procédé selon la revendication 11 ou la revendication 12, dans lequel l'identifiant de liste positive agrandit la plage de tolérance.

14. Procédé selon l'une des revendications précédentes, dans lequel les données physiques (112) en ce qui concerne une multiplicité d'emplacements différents du produit en forme de bande à contrôler sont données selon une grille prédéfinie, dans lequel le signal émis indique l'emplacement du défaut du produit en forme de bande, concernant les données physiques (112) en fonction desquelles la modélisation indique qu'un des produits (120) résultant du traitement par les unités de production (116) placées postérieurement ne correspond pas au critère de qualité prédéterminé.

15. Procédé selon la revendication 14, comprenant en outre le contrôle si une partie du produit final ne présentant pas l'emplacement du défaut correspond, en raison d'un traitement approprié du produit à vérifier, correspond à un autre produit final souhaité, le contrôle comprenant :
- la modélisation du traitement approprié d'une partie du produit à vérifier sans l'emplacement du défaut par plusieurs des unités de production (116) agencées postérieurement à l'unité de production (116) donnée en tenant compte des données physiques (112),
- dans le cas où la modélisation révèle qu'en tenant compte des données physiques (112) l'un des produits (120) résultant du traitement approprié par les unités de production (116) situées postérieurement ne correspond pas à un critère de qualité prédéterminé, il y a interruption de la fabrication prévue du produit final et émission du signal.

16. Produit-programme informatique avec des instructions exécutables par un ou plusieurs processeurs permettant l'exécution du procédé selon l'une des revendications précédentes.

17. Module de commande (100) pour une installation de production d'un laminoir permettant la fabrication d'un produit final en forme de bobine à partir d'une brame (118), où la fabrication comprend un traitement de la brame (118) par des unités de production (116) agencées les unes derrière les autres, où, en raison du traitement par les unités de production (116), il en résulte chaque fois un produit (120) en forme de bande, où, en raison du traitement par la dernière des unités de production (116), il en résulte le produit final en tant que produit (120), où le module de commande est conçu pour la réception de données physiques (112) d'un produit (120) en forme de bande à contrôler parmi les produits (120), lequel est le résultat du traitement par une unité de production (116) donnée parmi les unités de production (116), où les données physiques (112) comprennent une géométrie et/ou un poids, où le module de commande présente un processeur (102) et une mémoire (106) avec des instructions (110) exécutables par le processeur, où, en raison de l'exécution des instructions (110), le processeur (102) commande le module de commande (100) pour l'exécution d'un processus de contrôle, où le processus de contrôle comprend :
- la modélisation du traitement du produit à contrôler par plusieurs parmi les unités de production (116) agencées postérieurement à l'unité de production (116) donnée en tenant compte des données physiques (112),
- dans le cas où la modélisation révèle qu'en tenant compte des données physiques (112), un des produits (120) résultant du traitement par les unités de production (116) agencées postérieurement ne correspond pas à un critère de qualité prédéterminé, il y a une interruption de la fabrication prévue du produit (120) et l'émission d'un signal concernant l'interruption.
